# DEMANDE DE BREVET EUROPEEN

(11) **EP 4 840 740 A1**
(43) Date de publication de la demande: **18.11.2026**
(21) Numéro de dépôt: 26178386.4
(22) Date de dépôt: 12.05.2026
(51) Int. Cl.: B62K 7/04, B62K 7/00, B62K 5/06

(54) **VÉLO CARGO**

(30) Priorité: 14.05.2025 FR 2505131
(71) Demandeur: SUPB, 64121 Serres-Castet (FR)
(72) Inventeur: BOUHRAM, Yassine, 64000 PAU (FR); BELLARBRE, Vincent, 64290 GAN (FR); LAKHDAR, Abdelmounaim, 64000 PAU (FR)
(74) Mandataire: A.P.I. Conseil

(57) **Abrégé**

L'invention concerne un vélo cargo (1) comprenant :
- un cadre avant (100),
- un cadre arrière (200) comprenant :
∘ au moins deux roues arrière (210) respectivement montées sur une première et une deuxième partie de cadre latérale (221, 222),
∘ un dispositif de levage (300) comprenant :
▪ un cadre de levage (310) monté mobile de manière à permettre une translation verticale,
▪ deux bras de levage (320) montés mobile sur le cadre de levage 310 de manière à permettre une translation horizontale,

∘ au moins un axe de verrouillage (400) rétractable,

le dispositif de levage étant agencé pour passer d'une position de chargement dans laquelle l'axe de verrouillage est en position rétractée à une position de transport, dans laquelle le dispositif de levage est agencé pour soulever la palette et dans laquelle l'axe de verrouillage passe en position déployée de manière à bloquer le dispositif de levage.

## Description

### Domaine technique

L'invention concerne le domaine des véhicules de transport adaptés à la manutention et plus particulièrement celui des vélos cargo. En particulier, la présente invention concerne un vélo cargo optimisé pour une utilisation en milieu urbain et qui facilite le transport de marchandises.

La solution développée par le demandeur vise à fournir un véhicule utilitaire optimisé pour la manutention, c'est-à-dire qui permet un chargement/déchargement amélioré mais également qui assure une stabilité et un maintien des marchandises dans le vélo cargo pendant le transport.

### Technique antérieure

Ci-après, nous décrivons l'art antérieur connu à partir duquel l'invention a été développée.

Depuis quelques années, les véhicules associés aux mobilités dites douces telles que les deux-roues, les bicyclettes, les tandems, les vélo cargos, les trottinettes, etc., ainsi que pour le transport de marchandises (par exemple les chariots motorisés ou les remorques à assistance électrique) ont connu un essor majeur. Bien souvent, une assistance électrique est prévue et joue un rôle important dans la diminution des émissions polluantes et sonores, dans la facilité d'utilisation de ces véhicules, tout en assurant une réduction de l'impact environnemental des utilisateurs. Pour faciliter les déplacements dans les centres urbains, les avancées technologiques ont permis l'émergence de solutions performante et efficace, qui permettent d'accompagner une utilisation de plus en plus fréquente et intensifiée des vélos. Un outil qui est de plus en plus populaire en raison de sa polyvalence, de sa durabilité et de son faible impact environnemental.

L'utilisation toujours plus importante des cycles au quotidien, qu'ils soient à assistance électrique ou non, a également trouvé sa place dans l'industrie au sens large, plus particulièrement dans le cadre de la manutention sur site ou encore entre sites industriels relativement proche. En effet, l'utilisation de véhicules motorisés tels que des camionnettes ou des chariots nécessitent des formations voire des permis particuliers pour être conduits voire des autorisations administratives pour pouvoir circuler.

Afin de rendre plus accessible l'utilisation de véhicules dits à mobilité douce et de s'affranchir des contraintes liées aux véhicules précédemment mentionnés tout en conservant les avantages liés à leur utilisation opérationnelle, tels que la facilité de chargement/déchargement, des solutions ont vu le jour.

Par exemple, la demande de brevet n°WO2021209557 présente un attelage de transport d'une charge lourde pour un véhicule à assistance électrique. Un véhicule à assistance électrique équipé d'un tel attelage trouve une application particulière pour évacuer des déchets d'une zone urbaine, le véhicule étant alors apte à soulever et déplacer un bac à déchet, ou plus généralement toute charge lourde, d'un point de collecte à un point d'évacuation.

D'autres demandes de brevet tel que la demande de brevet n°WO2018194503 décrit un véhicule hybride sous la forme d'un vélo, qui fonctionne également comme un véhicule de chargement pouvant être utilisé par une seule personne même avec des charges très lourdes. Le véhicule hybride comprend une plateforme de chargement qui peut passer d'une position horizontale où la plateforme de chargement est disposée sur le dessus d'un châssis et fixé à celui-ci, à une position étendue dans laquelle la plateforme de chargement est tirée hors du châssis et inclinée sur une extrémité arrière du véhicule hybride pour fonctionner comme une rampe de chargement.

Cependant, ces solutions ne permettent pas d'une part un maintien optimal lors du déplacement du vélo cargo et d'autre part un chargement/déchargement amélioré de tout type de marchandise.

L'invention a pour but de remédier aux inconvénients de l'art antérieur. En particulier, l'invention a pour but de proposer un agencement particulier entre le cadre d'un vélo cargo et une structure de levage permettant le chargement et le transport de charges lourdes. L'architecture du vélo cargo permet le transport de charges importantes tout en assurant une manœuvrabilité optimale lors du transport mais également lors des phases de chargement/déchargement.

### Résumé de l'invention

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Cependant, ce résumé ne constitue pas un aperçu exhaustif de tous les aspects, modes de réalisation et exemples de l'invention. Son seul but est de présenter des aspects, modes de réalisation et exemples sélectionnés de l'invention sous une forme concise en guise d'introduction à la description plus détaillée des aspects, modes de réalisation et exemples de l'invention qui suivent le résumé.

L'invention vise en particulier un vélo cargo comprenant :
- un cadre avant sur lequel est monté une colonne de direction, un système de transmission et au moins une roue avant,
- un cadre arrière comprenant :
   ∘ au moins deux roues arrière respectivement montées sur une première et une deuxième partie de cadre latérale et reliées au système de transmission par un axe de transmission disposé dans une section de cadre arrière transversale reliant les parties de cadre latérale,
   ∘ un dispositif de levage fixé sur la section de cadre arrière transversale, le dispositif de levage comprenant :
      ▪ un cadre de levage monté mobile de manière à permettre une translation verticale du cadre de levage par rapport à un axe longitudinal de la section de cadre arrière transversale,
      ▪ deux bras de levage, s'étendant le long des parties de cadre latérale, montés mobile sur le cadre de levage de manière à permettre aux bras de levage une translation horizontale selon l'axe longitudinal de la section de cadre arrière transversale,
   ∘ au moins un axe de verrouillage rétractable monté sur au moins une partie de cadre latérale, l'axe de verrouillage étant agencé pour passer d'une position rétractée à une position déployée dans laquelle ledit axe s'étend selon l'axe longitudinal de la section de cadre arrière transversale,
le dispositif de levage étant agencé pour passer d'une position de chargement dans laquelle l'axe de verrouillage est en position rétractée et dans laquelle les deux bras de levage sont respectivement agencés pour passer dans des ouvertures ménagées entre des pieds d'un plancher inférieur d'une palette, à une position de transport, dans laquelle le dispositif de levage est agencé pour soulever la palette et dans laquelle l'axe de verrouillage passe en position déployée de manière à bloquer le dispositif de levage.

Selon d'autres caractéristiques optionnelles du vélo cargo, ce dernier peut inclure facultativement une ou plusieurs des caractéristiques suivantes, seules ou en combinaison :
- en position de transport, l'axe de verrouillage est agencé pour se déployer entre deux pieds de la palette.
- en position de transport, l'axe de verrouillage est agencé pour se déployer de manière à être positionné sous un des bras de levage.
- en position de transport, l'axe de verrouillage est agencé pour se déployer de manière que l'un des bras de levage ou la palette repose en appui sur ledit axe de verrouillage.
- Il comprend au moins deux axes de verrouillage.
- le dispositif de levage est agencé pour soulever une palette de sorte que la partie inférieure de la palette soit sensiblement au niveau d'une partie de cadre latérale.
- Il comprend en outre une ridelle transversale montée aux extrémités des parties de cadre latérale.
- le système de transmission comprend un essieu différentiel.
- Il comprend en outre une deuxième roue avant, la colonne de direction étant reliée à un premier tube de fourche et un second tube de fourche espacés l'un de l'autre selon une direction latérale du vélo cargo, le premier tube de fourche supportant la première roue avant et le second tube de fourche supportant la deuxième roue avant, les premier et second tube de fourche étant respectivement reliés à la colonne de direction par un axe de fourche supérieur et par un axe de fourche inférieur mobiles en translation, chaque axe de fourche inférieur comprenant en outre un amortisseur fixé entre l'axe de fourche inférieur et la colonne de direction.
- Il comprend un moteur électrique de propulsion couplé au système de transmission pour transmettre un mouvement de rotation du moteur électrique de propulsion aux deux roues arrière.

### Brève description des dessins

D'autres caractéristiques et avantages de l'invention seront mieux compris à la lecture de la description qui va suivre et en référence au dessin annexé, donné à titre illustratif et nullement limitatif.
[Fig. 1] La figure 1 représente un schéma d'une vue ¾ d'un vélo cargo selon un mode de réalisation de l'invention.
[Fig. 2] La figure 2 représente un schéma d'une vue de côté d'un vélo cargo selon un mode de réalisation de l'invention.
[Fig. 3] La figure 3 représente un schéma d'un cadre arrière d'un vélo cargo selon un mode de réalisation de l'invention.
[Fig. 4] La figure 4 représente un schéma d'un cadre arrière d'un vélo cargo selon un mode de réalisation de l'invention.
[Fig. 5] La figure 5 représente un schéma d'un cadre arrière d'un vélo cargo selon un mode de réalisation de l'invention.
[Fig. 6] La figure 6 représente un schéma d'un cadre arrière d'un vélo cargo selon un mode de réalisation de l'invention.
[Fig. 7A] La figure 7A représente un schéma d'une palette vue de dessus.
[Fig. 7B] La figure 7B représente un schéma d'une palette vue de côté.
[Fig. 8] La figure 8 représente un schéma d'un cadre avant d'un vélo cargo selon un mode de réalisation de l'invention.

Les figures ne respectent pas nécessairement les échelles, notamment en épaisseur, et ce à des fins d'illustration.

Des aspects de la présente invention sont décrits en référence à des schémas fonctionnels d'appareils (systèmes) selon des modes de réalisation de l'invention.

### Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

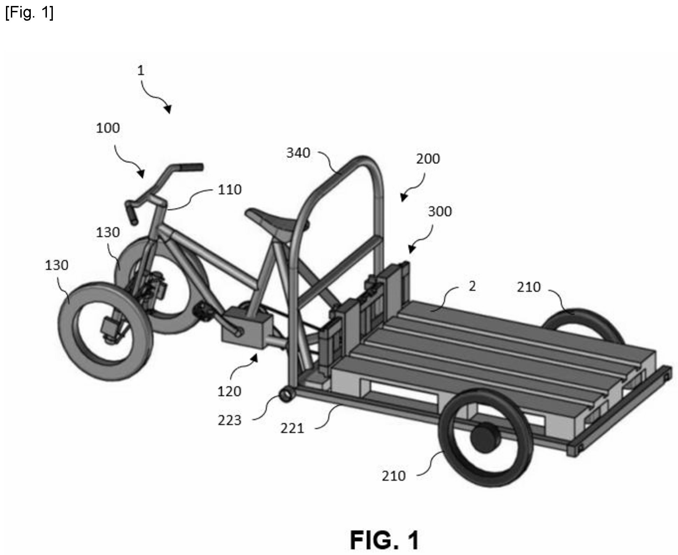

Ainsi, comme illustré dans les figures 1 à 3, l'invention concerne un vélo cargo 1 comprenant un cadre avant 100, une colonne de direction 110, un système de transmission 120, au moins une roue avant 130, un cadre arrière 200, au moins deux roues arrière 210, un dispositif de levage 300, et au moins un axe de verrouillage 400.

Selon l'invention, la colonne de direction 110 est montée sur le cadre avant 100 qui comprend notamment le système de transmission 120. La roue avant 130 peut être reliée à la colonne de direction 110 par l'intermédiaire d'une fourche et peut être dirigée par un guidon monté sur la colonne de direction 110.

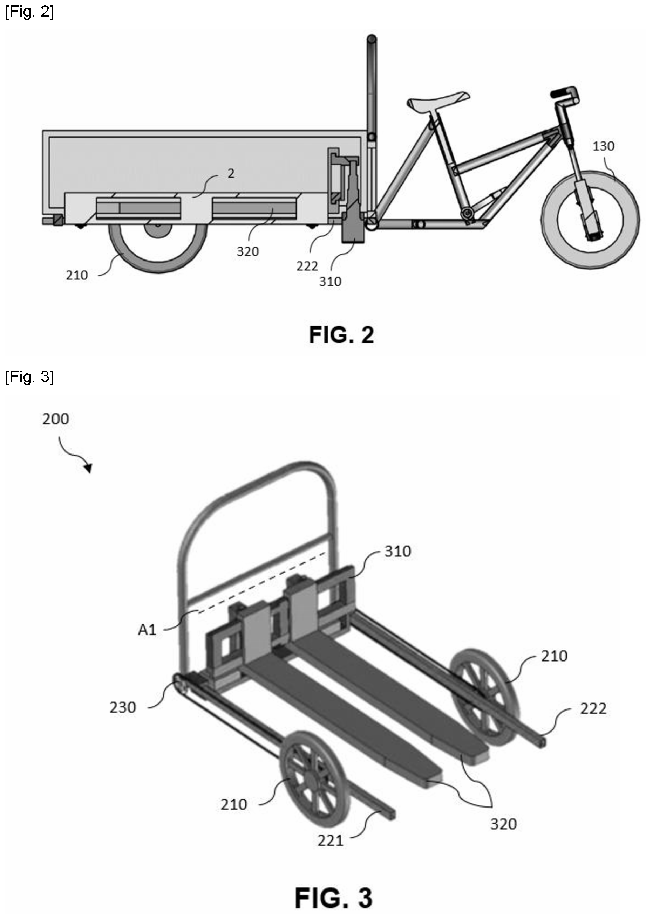

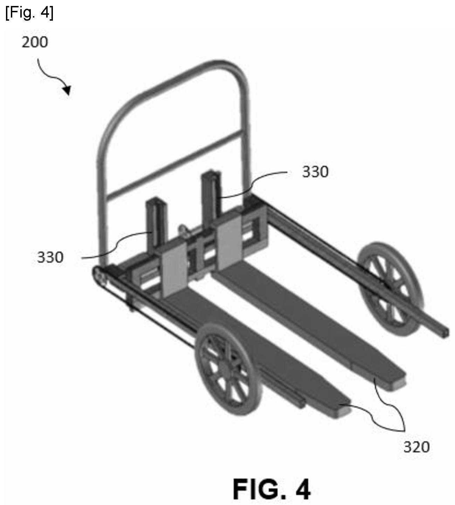

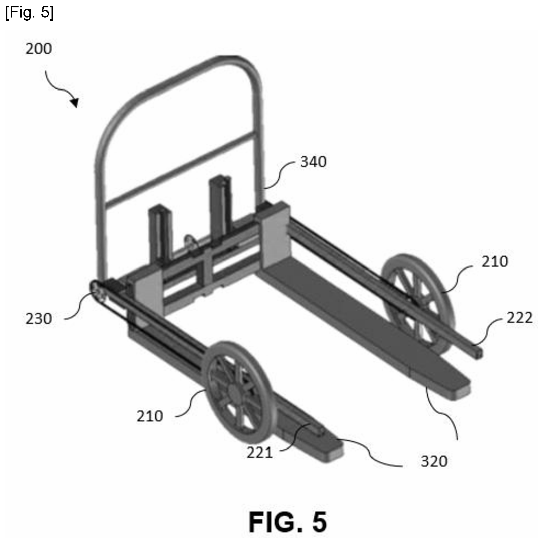

En outre, comme illustré dans les figures 3 à 5, le vélo cargo 1 comporte un cadre arrière 200 qui comprend une première et une deuxième partie de cadre latérale 221, 222 sur lesquelles sont montées au moins deux roues arrière 210, lesdites roues arrière étant reliées au système de transmission 120 par un axe de transmission 230. Le système de transmission 120 peut en outre comprendre un pédalier qui peut permettre d'entrainer en rotation l'axe de transmission 230 et par voie de conséquence les roues arrière 210.

L'axe de transmission 230 est disposé dans une section de cadre arrière 223 transversale reliant les parties de cadre latérale 221, 222. L'axe de transmission 230 peut comprendre à chacune de ses extrémités une courroie de distribution à chaine permettant de mettre en rotation chaque roue arrière 210.

Dans un mode de réalisation optionnel d'un vélo cargo selon l'invention, le système de transmission 120 peut comprendre un essieu différentiel, par exemple mécanique ou à assistance électrique. L'essieu différentiel permet d'optimiser la maniabilité et d'assurer une sécurité accrue dans les virages, mais également une répartition égale de la force de rotation entre les roues arrière 210, améliorant ainsi la stabilité du vélo, réduisant les risques de basculement dans les virages serrés et facilitant une conduite plus fluide même avec des charges élevées.

Les cadres avant 100 et arrière 200 peuvent être des cadres métalliques soudés ou assemblés et réalisés en tube, profilé ou en tôle, offrant une robustesse et une stabilité accrue.

Toujours dans le cadre de l'invention, le vélo cargo 1 comprend en outre un dispositif de levage 300 fixé sur la section de cadre arrière 223 transversale. Le dispositif de levage 300 comprend un cadre de levage 310 et deux bras de levage 320.

Le cadre de levage 310 est monté mobile de manière à permettre une translation verticale du cadre de levage 310 par rapport à un axe longitudinal A1 de la section de cadre arrière 223 transversale.

Les deux bras de levage 320 s'étendent le long des parties de cadre latérale 221, 222, et sont montés mobile sur le cadre de levage 310 de manière à permettre aux bras de levage 320 une translation horizontale selon l'axe longitudinal A1 de la section de cadre arrière 223 transversale. De manière préférée, les deux bras de levage 320 sont dimensionnés de manière à être d'une longueur sensiblement égale à celle des parties de cadre latérale 221, 222.

A titre d'exemple illustratif, le dispositif de levage 300 peut comprendre au moins un, de préférence au moins deux rails de guidage 330 afin d'assurer un mouvement de translation verticale du cadre de levage 310.

La possibilité de mouvement horizontal et vertical des bras de levage 320 permet ainsi une adaptation optimale à tout type de palettes tout en assurant un positionnement adéquat de la palette et une répartition adaptée du poids de la palette sur les fourches de levage.

A titre d'exemple non limitatif, les bras de levage 320 peuvent être des fourches de transpalette.

Le cadre de levage 310 et notamment les bras de levage 320 peuvent être associés à différents mécanismes de levage afin de réaliser les mouvements de translation verticale et horizontale tel qu'un mécanisme hydraulique, par exemple un vérin hydraulique, mécanique, par exemple une crémaillère ou un système vis-écrou.

Dans le cadre d'un vélo cargo 1 selon l'invention, ce-dernier comprend au moins un axe de verrouillage 400 rétractable monté sur au moins une partie de cadre latérale 221, 222. L'axe de verrouillage 400 est agencé pour passer d'une position rétractée à une position déployée.

En position rétractée, le dispositif de levage 300 présente un degré de liberté de mouvement permettant une translation horizontale et verticale maximale des bras de levage 320.

En position déployée, l'axe de verrouillage 400 s'étend selon l'axe longitudinal de la section de cadre 223 arrière transversale. L'axe de verrouillage 400 peut ainsi permettre d'empêcher et ou de limiter les mouvements de translation horizontale et/ou verticale des bras de levage 320.

En outre, le dispositif de levage 300 d'un vélo cargo 1 selon l'invention est en outre agencé pour passer d'une position de chargement à une position de transport.

Pour mettre en mouvement le dispositif de levage 300 selon les différents mouvements de translation, le vélo cargo 1 selon l'invention peut être pourvu d'un moteur électrique intégré. Le moteur électrique intégré peut être relié à un dispositif de stockage d'énergie électrique du vélo cargo 1 auquel le dispositif de levage 300 est couplé ou bien il peut être directement relié à un dispositif de stockage d'énergie électrique dédié. Le moteur électrique intégré peut également être relié à un interface homme-machine de commande qui permet d'actionner le dispositif de levage 300 dans les différents mouvements de translation précédemment évoqués.

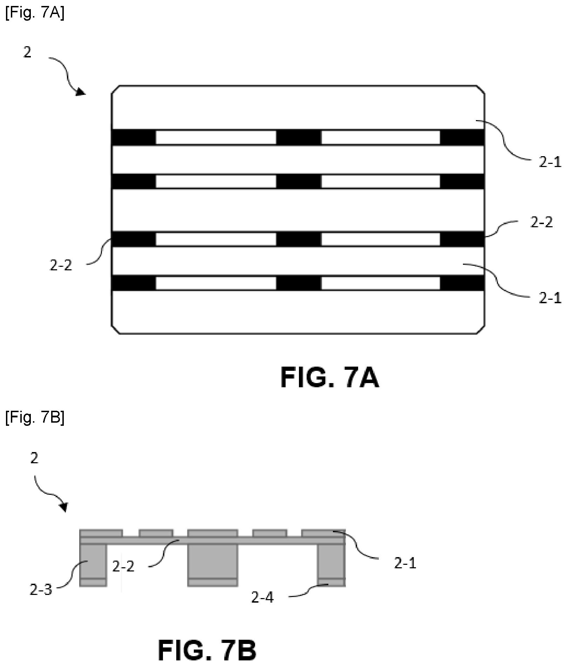

Les figures 7A et 7B présentent un exemple de palette 2 qui se compose principalement d'un plancher constitué d'une pluralité de planches 2-1 montées sur des traverses 2-2 elles-mêmes fixées sur une pluralité de pieds 2-3 fixés à un plancher inférieur 2-4.

Le plancher peut être constitué de plusieurs planches 2-1 de largeur et épaisseur variables et espacées d'une distance prédéterminée ou bien peut être plein. Les traverses 2-2 peuvent être au nombre de 3 pour les dimensions standard voire plus, elles assurent le lien entre le plancher et les pieds 2-3 dont la fonction principale est de créer un espace pour le passage des organes de manipulation (ici les bras de levage 320). Le plancher inférieur 2-4 correspond à la partie de la palette 2 qui repose sur le sol. Elle comprend généralement 3 planches mais peut en comprendre 5 voire plus. Le plancher inférieur 2-4 permet de consolider l'assemblage et d'offrir la stabilité requise pour l'entreposage des produits.

Ainsi, en position de transport, l'axe de verrouillage 400 est en position rétractée et les deux bras de levage 320 sont respectivement agencés pour passer dans des ouvertures ménagées entre les pieds 2-3 du plancher inférieur 2-4 d'une palette 2.

Enfin, en position de transport, le dispositif de levage 300 est agencé pour soulever la palette 2 et, l'axe de verrouillage 400 pour passer en position déployée de manière à bloquer le dispositif de levage 300.

Selon un mode de réalisation optionnel, le dispositif de levage 300 peut être agencé pour soulever une palette 2 de sorte que la partie inférieure de la palette 2 soit sensiblement au niveau d'une partie de cadre latérale 221, 222.

A titre d'exemple illustratif, l'axe de verrouillage 400 peut être agencé pour se déployer entre deux pieds 2-3 de la palette 2. Cela permet ainsi d'éviter que la palette 2 subisse un mouvement de translation horizontale ou verticale susceptible d'endommager la palette 2 ou le dispositif de levage 300 voire de faire glisser la palette 2 hors des bras de levage 320 lorsque le vélo cargo 1 est en mouvement.

En alternative ou en complément, en position de transport, l'axe de verrouillage 400 peut être agencé pour se déployer de manière à être positionné sous un bras de levage 320. Cela permet ainsi de limiter la course de la palette 2 en cas de choc lors du déplacement du vélo cargo 1 et ainsi assurer la stabilité du vélo cargo 1 tout en évitant d'endommager la palette 2 ou le dispositif de levage 300.

Dans un autre mode de réalisation, en position de transport, l'axe de verrouillage 400 peut en outre être agencé pour se déployer de manière que l'un des bras de levage 320 ou la palette 2 repose en appui sur ledit axe de verrouillage. Cela permet d'assurer une répartition du poids de la palette 2 optimale entre les bras de levage 320 et le cadre arrière 200 et limite fortement les mouvements intempestifs du dispositif de levage 300 lorsque le vélo cargo 1 est en mouvement.

Selon un mode de réalisation particulier, le vélo cargo 1 peut comprendre au moins deux axes de verrouillage 400. Les deux axes de verrouillage 400 peuvent être respectivement positionnés sur la première et la deuxième partie de cadre latérale 221, 222, de préférence à des extrémités opposées des première et deuxième partie de cadre latérale 221, 222 ou bien de manière que les deux axes de verrouillage 400 soient positionnés en miroir. En complément, le vélo cargo 1 peut comprendre quatre axes de verrouillage 400 positionnés deux à deux, en miroir, sur les première et deuxième partie de cadre latérale 221, 222.

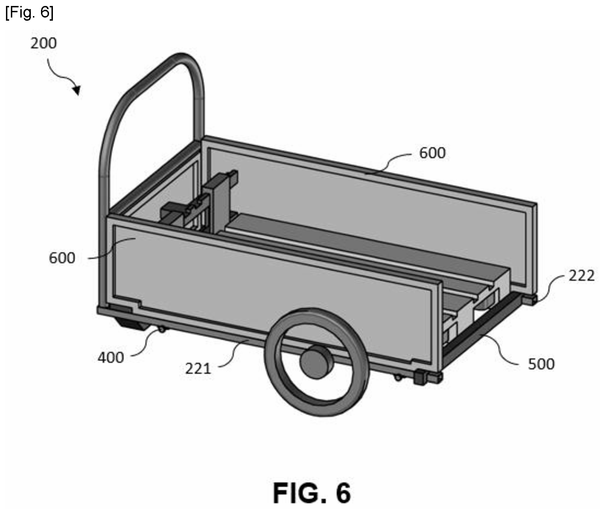

Afin d'assurer un maintien optimal et d'éviter la sortie d'une palette 2 tout en empêchant un écartement des parties de cadre latérale 221, 222 lorsque le vélo cargo 1 est en position de transport, le vélo cargo 1 peut comprendre une ridelle 500 transversale montée aux extrémités des parties de cadre latérale 221, 222 comme illustré en figure 6. De préférence, lorsque le vélo cargo 1 est en position de transport, le plancher inférieur 2-4 de la palette 2 est positionné de sorte que la ridelle 500 transversale empêche la palette 2 de glisser hors des bras de levage 320. La ridelle 500 transversale permet d'assurer une résistance à la déformation des parties de cadre latérale 221, 222 lorsque la palette 2 est chargée.

De manière avantageuse, la ridelle 500 transversale peut être amovible et/ou comprendre un panneau rabattable.

En alternative ou en complément, le vélo cargo 1 selon l'invention peut comprendre des panneaux latéraux 600 montés sur les parties de cadre latérale 221, 222.

Afin d'assurer une protection de l'utilisateur lors du déplacement du vélo cargo 1, ce dernier peut comprendre un arceau de sécurité 340 positionné entre le cadre avant 100 et le cadre arrière 200. L'arceau de sécurité 340 peut être dimensionné de manière à bloquer toute chute des marchandises positionnées sur la palette 2 vers l'utilisateur.

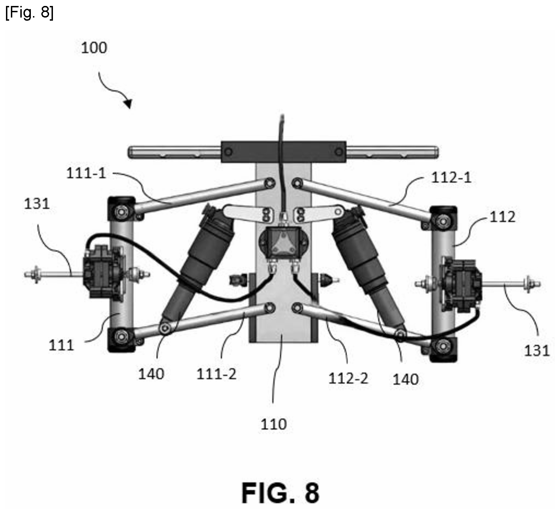

Dans un mode de réalisation d'un vélo cargo 1 selon l'invention, ce dernier peut comprendre une deuxième roue avant 130, par exemple montée sur un moyeu 131. Comme illustré en figure 8, dans ce mode de réalisation, la colonne de direction 110 est reliée à un premier tube de fourche 111 et à un second tube de fourche 112 espacés l'un de l'autre selon une direction latérale, de part et d'autre de la colonne de direction 110 du vélo cargo 1. Le premier tube de fourche 111 supporte la première roue avant et le second tube de fourche 112 supporte la deuxième roue avant, et lesdits tubes de fourche 111, 112, sont respectivement reliés à la colonne de direction 110 par un axe de fourche supérieur 111-1, 112-1 et par un axe de fourche inférieur 111-2, 112-2 mobiles en translation. Afin d'assurer une stabilité du vélo cargo 1 lorsque celui-ci est en mouvement et transporte des marchandises sur une palette 2, chaque axe de fourche inférieur 111-2, 112-2, peut en outre comprendre un amortisseur 140 fixé entre l'axe de fourche inférieur 111-2, 112-2 et la colonne de direction 110. Un tel agencement assure un montage de l'amortisseur 140 sur l'axe de fourche inférieur 111-2, 112-2 et la colonne de direction 110 de manière à permettre un amorti de chaque roue indépendamment l'une de l'autre. Cette configuration permet de supporter le poids de charges importantes appliquées sur les fourches et permet une adaptation aux surfaces urbaines, ainsi qu'une stabilité améliorée même lors de déplacements sur des terrains irréguliers ou dans les rues pavées.

En alternative ou en complément, le vélo cargo 1 selon l'invention peut comprendre un moteur électrique de propulsion couplé au système de transmission 120 pour transmettre un mouvement de rotation du moteur électrique de propulsion aux deux roues arrière 210, notamment via l'axe de transmission 230. Le moteur électrique de propulsion est de préférence couplé à une batterie dédiée, et la force de propulsion adaptée à une assistance de propulsion peut alors être appliquée aux roues de l'attelage de transport.

L'invention peut faire l'objet de nombreuses variantes et applications autres que celles décrites ci-dessus. En particulier, sauf indication contraire, les différentes caractéristiques structurelles et fonctionnelles de chacune des mises en œuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Vélo cargo (1) comprenant :
- un cadre avant (100) sur lequel est monté une colonne de direction (110), un système de transmission (120) et au moins une roue avant (130),
- un cadre arrière (200) comprenant :
- au moins deux roues arrière (210) respectivement montées sur une première et une deuxième partie de cadre latérale (221, 222) et reliées au système de transmission (120) par un axe de transmission (230) disposé dans une section de cadre arrière (223) transversale reliant les parties de cadre latérale (221, 222),
- un dispositif de levage (300) fixé sur la section de cadre arrière (223) transversale, le dispositif de levage (300) comprenant :
- un cadre de levage (310) monté mobile de manière à permettre une translation verticale du cadre de levage (310) par rapport à un axe longitudinal (A1) de la section de cadre arrière (223) transversale,
- deux bras de levage (320), s'étendant le long des parties de cadre latérale (221, 222), montés mobile sur le cadre de levage 310 de manière à permettre aux bras de levage (320) une translation horizontale selon l'axe longitudinal (A1) de la section de cadre arrière (223) transversale,
- au moins un axe de verrouillage (400) rétractable monté sur au moins une partie de cadre latérale (221, 222), l'axe de verrouillage (400) étant agencé pour passer d'une position rétractée à une position déployée dans laquelle ledit axe de verrouillage (400) s'étend selon l'axe longitudinal (A1) de la section de cadre arrière (223) transversale,
le dispositif de levage (300) étant agencé pour passer d'une position de chargement dans laquelle l'axe de verrouillage (400) est en position rétractée et dans laquelle les deux bras de levage (320) sont respectivement agencés pour passer dans des ouvertures ménagées entre des pieds (2-3) d'un plancher inférieur (2-4) d'une palette (2), à une position de transport, dans laquelle le dispositif de levage (300) est agencé pour soulever la palette (2) et dans laquelle l'axe de verrouillage (400) passe en position déployée de manière à bloquer le dispositif de levage (300).

2. Vélo cargo (1) selon la revendication 1, dans lequel, en position de transport, l'axe de verrouillage (400) est agencé pour se déployer entre deux pieds (2-3) de la palette (2).

3. Vélo cargo (1) selon l'une des revendications 1 ou 2, dans lequel, en position de transport, l'axe de verrouillage (400) est agencé pour se déployer de manière à être positionné sous un des bras de levage (320).

4. Vélo cargo (1) selon l'une quelconque des revendications 1 à 3, dans lequel, en position de transport, l'axe de verrouillage (400) est agencé pour se déployer de manière que l'un des bras de levage (320) ou la palette (2) repose en appui sur ledit axe de verrouillage (400).

5. Vélo cargo (1) selon l'une quelconque des revendications 1 à 4, ledit vélo comprenant au moins deux axes de verrouillage (400).

6. Vélo cargo (1) selon l'une quelconque des revendications 1 à 5, dans lequel le dispositif de levage (300) est agencé pour soulever une palette (2) de sorte que la partie inférieure de la palette soit sensiblement au niveau d'une partie de cadre latérale.

7. Vélo cargo (1) selon l'une quelconque des revendications 1 à 6, ledit vélo comprenant en outre une ridelle (500) transversale montée aux extrémités des parties de cadre latérale (221, 222).

8. Vélo cargo (1) selon l'une quelconque des revendications 1 à 7, dans lequel le système de transmission (120) comprend un essieu différentiel.

9. Vélo cargo (1) selon l'une quelconque des revendications 1 à 8, ledit vélo comprenant en outre une deuxième roue avant (130), la colonne de direction (110) étant reliée à un premier tube de fourche (111) et un second tube de fourche (112) espacés l'un de l'autre selon une direction latérale du vélo cargo, le premier tube de fourche (111) supportant la première roue avant (130) et le second tube de fourche (112) supportant la deuxième roue avant (130), les premier et second tube de fourche (111, 112) étant respectivement reliés à la colonne de direction (110) par un axe de fourche supérieur (111-1, 112-1) et par un axe de fourche inférieur (111-2, 112-2) mobiles en translation, chaque axe de fourche inférieur (111-2, 112-2) comprenant en outre un amortisseur (140) fixé entre l'axe de fourche inférieur (111-2, 112-2) et la colonne de direction (110).

10. Vélo cargo (1) selon l'une quelconque des revendications 1 à 9, ledit vélo cargo comprenant un moteur électrique de propulsion couplé au système de transmission (120) pour transmettre un mouvement de rotation du moteur électrique de propulsion aux deux roues arrière (210).
